Europäisches Patentamt

European Patent Office

Office européen des brevets

(19)

(11) Veröffentlichungsnummer : **0 004 094**
**B2**

(12) **NEUE EUROPÄISCHE PATENTSCHRIFT**

(45) Veröffentlichungstag der neuen Patentschrift :
**23.03.88**

(51) Int. Cl.⁴ : **C 05 F   9/02**

(21) Anmeldenummer : **79100743.8**

(22) Anmeldetag : **12.03.79**

(54) Vorrichtung zum Aufbereiten von kompostierfähigem Material.

(30) Priorität : **13.03.78 DE 2810842**
**14.03.78 DE 2810911**
**03.05.78 DE 2819360**

(43) Veröffentlichungstag der Anmeldung :
**19.09.79 Patentblatt 79/19**

(45) Bekanntmachung des Hinweises auf die Patenterteilung : **30.12.81 Patentblatt 81/52**

(45) Bekanntmachung des Hinweises auf die Entscheidung über den Einspruch : **23.03.88 Patentblatt 88/12**

(84) Benannte Vertragsstaaten :
**CH FR GB IT NL SE**

(56) Entgegenhaltungen :
**CH-C-   568 253**
**DE-A- 1 592 588**
**DE-A- 2 226 729**
**DE-A- 2 302 805**
**DE-A- 2 302 882**
**DE-A- 2 451 284**
**DE-A- 2 607 209**
**DE-A- 2 628 772**
**DE-C-   546 074**
**DE-C- 1 145 646**
**DE-C- 1 607 608**
**FR-A-   427 024**
**FR-A- 1 405 525**
**FR-A- 1 569 496**
**FR-A- 2 058 250**
**GB-A-   521 894**
**GB-C-   521 895**
**US-A- 2 611 975**
**US-A- 2 867 521**
**Aufsatz Wyss "Das statisch/dynamische Bühler-Kompostierungsverfahren" Zeitschrift "Aufbereitungstechnik 1977, Nr. 1, Seiten 29-33**
**Kumpf/Maas/Straub "Müll- und Abfallbeseitigung", Kennzahl 5510, Seiten 29/30, der Lieferung 1968**

(73) Patentinhaber : **Bürklin, Werner**
**Sonnhaldenstrasse 7**
**CH-8280 Kreuzlingen (CH)**

(72) Erfinder : **Bürklin, Werner**
**Sonnhaldenstrasse 7**
**CH-8280 Kreuzlingen (CH)**

(74) Vertreter : **Hiebsch, Gerhard F., Dipl.-Ing.**
**Erzbergerstrasse 5A Postfach 464**
**D-7700 Singen 1 (DE)**

Kurney "Müll-Klärschlamm-Kompostierungsanlage für den Kreis Gross-Gerau" Zeitschrift "Aufbereitungstechnik 1975, Heft 5, Seiten 219-225
Meyer "Schweinfurter Anlage zur gemeinsamen Behandlung", Zeitschrift "Kommunalwirtschaft", Heft 9 von 1965

**Beschreibung**

Die Erfindung betrifft eine Vorrichtung zum Aufbereiten von Rohkompost auf einer Lagerfläche mittels einer diese überspannenden und verfahrbaren Ladebrücke mit einer bandartigen Fördereinrichtung sowie einem an der Ladebrücke angeordnbeten, zu der Lagerfläche gerichteten Austrag für den Rohkompost, welcher durch Zwischenförderer auf die bandartige Fördereinrichtung gebracht sowie unterhalb der Ladebrücke als Kompostmiete aufgesetzt werden kann.

Üblicherweise wird kompostierfähiges Material auf sehr großen Lagerflächen zu Kompostmieten aufgeschüttet, wo es — gegebenenfalls durch Gräben belüftet — während einer verhältnismäßig langen Zeit lagert. Zum Aufschütten derartiger Kompostmieten sind Portalgestelle bekannt, welche die Lagerfläche bzw. den Lagerplatz übergreifen und zumindest ein Förderband tragen. Dieses übergibt das von ihm herangeführte Material über eine Ladeschurre einem rüsselartig nach unten ragenden Fallschacht, aus welchen der Kompost zum Teil sehr großklumpig fällt und einzelne Schüttkegel bildet ; diese Schüttkegel erzeugen bei der fertigen Miete eine gewellte Oberfläche. Will man diese beseitigen, müssen unter Einsatz von teurem Bedienungspersonal besondere Glättarbeiten durchgeführt werden.

Als weiterer Mangel hat sich ergeben, daß sogenannte Kompostmieten od. dgl. Haufwerke im Verlaufe ihrer Standzeit mehrmals umgesetzt bzw. belüftet werden. Zur Unterlüftung solcher Mieten ist es bekannt, vor deren Herstellung auf dem Boden ein Tunnelsystem aus Profilmaterial zu errichten, welches in der fertigen Miete ein Luftzufuhrsystem bildet ; auch nach Herausziehen der Profile aus der Miete verbleibt eine gelockerte Zone. Nachteilig ist hierbei, daß sowohl bei dem voranstehenden Verfahren als auch bei Gräben, welche man in die Miete fräst, lediglich bestimmte Randzonen durchlüftet werden und zwischer diesen Pfeiler aus verdichtetem Kompost od. dgl. erhalten bleiben. Nicht zuletzt führt dies zu unverhältnismäßig übelriechendem Haufwerk.

Ein weiteres Problem ist im verhältnismäßig hohen Flächerbedarf zu sehen. Man hat versucht, die Abfallstolle in Preßlinge zu formen, um damit dem Platzbedarf des lockeren Haufwerkes um nahezu zwei Drittel zu reduzieren. Auch ist man zur Auffassung gelangt, daß verpreßte Abfallstoffe zu weniger Geruchsbelästigung neigen. Hierzu werden üblicherweise Ziegelpressen herangezogen, von denen die Preßlinge in einem gesonderten Arbeitsgang abgenommen und auf Paletten verladen werden. Letztere fährt man mit Gabelstaplern zu einen Stapelplatz und errichtet dort in einem erneuten Arbeitsgang eine dichte Miete aus einandergesetzten Preßlingen.

Eine Vorrichtung der eingangs genannten Art ist der « Aufbereitungstechnik-Nr. 5/1975, S. 219 bis 225 », zu entnehmen. Dort wird als Zwischenförderer ein Gummiförderband beschrieben, das einen Tragkettenförderer der Ladebrücke beschickt ; dieser ist auf eine bestimmte Länge geöffnet und bildet so einen Austrag für ein Müll-Klärschlamm-Gemisch. Unter dem Austrag entsteht ein Schüttkegel.

Diese Vorrichtung erlaubt lediglich einen Abwurf des Materials aus größerer Höhe und ermöglicht zudem lediglich das Aufsetzen der Kompostmiete.

Angesichts dieser Gegebenheiten hat sich der Erfinder das Ziel gesetzt, eine derartige Vorrichtung so zu verbessern, daß auf möglichst vollautomatische Weise gut durchlüftete Mieten schichtweise hergestellt werden können. Diese Mieten sollen — bei gleichbleibendem Volumen — verhältnismäßig wenig Fläche beanspruchen und umweltfreundlich sein. Auch wird ein hoher Wirkungsgrad der Anlage angestrebt.

Zur Lösung dieser Aufgabe führt, daß die Ladebrücke mit wenigstens einem Hubelement versehen ist, an dem die etwa horizontale bandartige Fördereinrichtung vertikal bewegbar angeordnet ist, daß die Fördereinrichtung den Austrag für den Rohkompost bilder daß die Fördereinrichtung an der Ladebrücke durch einen längenveränderlichen ersten Zwischenförderer angeschlossen ist und daß an der Ladebrücke, oder an zumindest einem Huborgan der Ladebrücke ein zur Auflockerung dienendes Fräswerk angeordnet ist.

Auflockereinrichtungen oberhalb von Mieten sind aus der GB-A-521 895 als verfahrbare Zinkenräder bekannt, die an einem langen Tragarm verschwenkt werden. Solche Auflockereinrichtungen können aber auf die erfindungsgemäße Vorrichtung nicht übertragen werden. Darüberhinaus hat es sich als günstig erwiesen, daß an der Ladebrücke oder an dem Hubelement wenigstens eine Preßvorrichtung mit bewegbaren Preßkanälen zum Herstellen von Preßlingen angeordnet ist und, daß der Preßkanal ein Stapelorgan für die Preßlinge bildet oder mit einem solchen Organ versehen ist.

So können mehrere Schichten quer zu ihrer Verlegerichtung gemeinsam stufenweise aufgelockert bzw. gefräst oder gepreßt verlegt — und gegebenenfalls anschließend gefräst — werden.

Von besonderer Bedeutung ist es, daß das Kompostiermaterial als Schüttgut zu einer Lagerfläche geführt sowie dort mit Hilfe einer koordinatenmäßig bewegbaren Preßvorrichtung zu Preßlingen verformt wird und diese durch die Preßvorrichtung in Abstand zueinander gestapelt werden. Dabei kann Klärschlamm — als Absetzschlamm von mehr als 80 % — bevorzugtermaßen mehr als 90 % — Feuchtigkeit mit zerkleinerten Müllanteilen vermischt und anschließend an der Lagerfläche verpreßt werden.

Die Preßlinge werden unter Auspressen von Flüssigkeit hergestellt, welche man zum Benetzen bereits gestapelter Preßlinge verwendet. Dank dieser Maßgabe werden mehrere Arbeitsgänge eingespart und eine vereinfachte Deponierung des gepreßten Abfallstoffes erreicht. Eine Verbesserung des Preßvorganges kann noch dadurch erzielt werden, daß der Abfallstoff vor dem Pressen einer Vibration unterzogen wird.

Um eine verbesserte Trocknung zu erreichen, werden die Preßlinge zueinander in Abstand unter Bildung von Luftkanälen gestapelt und wenigstens an zwei ihrer Außenflächen von Luft umspült.

Ein besonders wirkungsvolles Belüften bzw. Bearbeiten der Mieten aus kompostierbarem Material wird dadurch erreicht, daß die Luft in die Kompostmiete mittels — von deren Oberfläche aus — eingeführter Belüftungslanzen eingeblasen wird, so daß nach dem Entfernen der Belüftungslanzen ein System von Belüftungskanälen erzeugt wird. Die Kompostmiete wird bevorzugt punktartig und gegebenenfalls in einer vollautomatisch gesteuerten Rasteranordnung dieser Punkte belüftet. Temperatur und/oder die Festigkeit der Kompostmiete werden in deren horizontalen Erstreckung und/oder vertikal rasterförmig aufgenommen ; die so erhaltenen Werte gibt man einem Rechenwerk ein, welches — beispielsweise nach einem Vergleich der Ist-Zahlen mit vorgegebenen Sollwerten — Impulse an Steuerorgane für die Blasluftzuführung weiterleitet.

Dies kann sowohl bezüglich ihrer Menge als auch des Druckes variiert werden, was eine Regulierung der Mietenkonsistenz erlaubt, ohne daß es der üblichen Bedienungsperson bedürfte. Die erfindungsgemäße Anlage kann völlig selbsttätig wirken.

Die Belüftung von Kompostmieten kann kostengünstig gestaltet werden, wenn von der Miete abgegebene Gase wenigstens teilweise in diese zur Belüftung zurückgeführt werden. Dabei sollen jene Gase bevorzugt in einem von ihnen durchgezogenen Kreislauf gereinigt und gegebenenfalls teilweise einer sogenannten Schrottmiete zugeführt werden.

Hierzu ist über der Kompostmiete wenigstens eine Saugeinrichtung für Gase angeordnet und mit einem Belüftungssystem für die Miete verbunden. Die Saugeinrichtung ist an wenigstens einen Lüfter angeschlossen, dessen Ausblasende die Luft oder die Gase an das Belüftungssystem dieser oder einer anderen — auf einem Nachrotteplatz lagernden — Miete weiterleitet.

Eine für die Durchführung der erfindungsgemäßen Belüftung besonders geeignete Anlage zeichnet sich dadurch aus, daß an der übergreifenden Ladebrücke oder an wenigstens einem Hubelement zumindest eine Belüftungslanze bewegbar, angebracht sowie mit einer Luftzuführleitung verbunden ist. Dabei hat es sich als besonders günstig erwiesen, die Belüftungslanze längenveränderlich auszubilden, beispielsweise die Spitze der Belüftungslanze aus einem Rohrkörper teleskopartig ausfahrbar zu gestalten. In diesem Falle sitzt der Rohrkörper — gegebenenfalls schwenkbar — fest an der Hubvorrichtung ; aus ihm fährt die Spitze abwärts in die Miete ein und zwar bis zu einer vom Steuergerät bestimmten Höhe, in welcher dann der Belüftungsvorgang einsetzt.

Hierzu dient — nach einem Merkmal der Erfindung — wenigstens eine an der Lanzenspitze angeordnete Blasdüse, welche gegebenenfalls beim Absenken der Belüftungslanze hinter Schutzschirmen verborgen ist und beim Erreichen der vorgesehenen Belüftungsstelle ausgefahren wird.

Als günstig hat es sich erwiesen, zumindest im Bereich der Lanzenspitze Temperaturfühler oder Druckmeßorgane vorzusehen, um die Belüftungslanze gleichzeitig zu der bereits geschilderten Beobachtung der Mietentemperatur und — festigkeit verwenden zu können. Auch kann die Lanzenspitze mit einer Probenahmeeinrichtung ausgerüstet sein.

Es kann von Bedeutung sein, in Abhängigkeit von der gemessenen Temperatur der Miete deren Oberfläche mit Wasser od. dgl. zu besprühen, wozu zumindest an der Belüftungslanze Sprühdüsen für die Flüssigkeit angebracht sind ; weitere Sprühorgane können unmittelbar mi der Hubvorrichtung, beispielsweise der Laderbrücke, verbunden sein.

Man ist nun dank der Kontroll- und Steuergeräte in der Lage, jene Temperaturfühler, Druckmeßorgane, Sprüh- oder Blasdüsen so zu steuern, daß — in Draufsicht auf die Miete — die Bearbeitungsstellen ein Rasternetz mit wählbarer Maschenweite ergeben und auch in ihrer Höhe vorwählbar sind — was zu einem dreidimensionalen Koordinatensystem führt.

Als weiterer Vorteil der erfindungsgemäßen Vorrichtung muß angesehen werden, daß durch das Einstechen der Belüftungslanzen in die Miete Hohlräume entstehen, welche ein weiteres Belüften auch nach dem Entfernen der Belüftungslanzen erlauben.

Bevorzugtermaßen wird die Fördereinrichtung als Stegkettenförderer mit um einen horizontal gerichteten Siebboden laufenden Querstegen ausgebildet und gegebenenfalls über eine verfahrbare Übergabevorrichtung durch einen längenveränderlichen Zwischenförderer an eine Förderstraße angeschlossen. In der Übergabevorrichtung, die sich zwischen dem Stegkettenförderer un dem ersten Zwischenförderer bevorzugsterweise am Übergang zwischen Förderstraße und dem ersten Zwischenförderer befindet, wird in der Bewegungsbahn des Rohkompostes ein Organ zur Partikelbeschleunigung angeordnet. Dank dieser Maßnahme ist es nunmehr möglich, die Säuberung des Kompostes gleichzeitig mit der Verlegung der Schichten durchzuführen — und dies ohne kostenintensiven Aufwand. Die Trennung zwischen den Hartstoffen und dem feineren Kompostiermaterial erfolgt nach Beschleunigung durch jenes Beschleunigungsorgan, vorteilhafterweise ein am Übergang zwischen Förderstraße und Zwischenförderer an einer horizontalen Welle angeordnetes Zellenrad. Ein darunter angeordneter und zur Lagerfläche geneigt laufender, gegebenenfalls in seiner Neigung einstellbarer Kurzförderer und eine parallel zur Zellenradwelle sowie zu ihr in horizontalem Abstand vorgesehene Prallplatte gehören ebenfalls zu der verfahrbaren Übergabevorrichtung. In einem bevorzugten Ausführungsbeispiel ist unterhalb der Prallplatte ein Querförderer zur Aufnahme von Hartstoffen so angeschlossen, daß die Hartstoffe vom Zellenrad auf den geneigt laufenden Kurzförderer von dort aufwärts gegen die Prallplatte und von dieser zum Querförderer geschleudert werden. Die weicheren Kompostteile werden vom Kurzförderer aufwärts gefördert und über sein oben liegendes Austragsende abgezogen.

Ist der bevorzugtermaßen mit Stahlteilen belegte Kurzförderer in seiner Neigung verstellbar, so kann die Trenngrenze zwischen Hartstoffen und weicheren Materialpartikeln ·wählbar gesteuert werden.

Nach einem weiteren Merkmal ist am Austragsende jenes Kurzförderers wenigstens ein Zwischenförderer angeordnet, der entweder direkt mit einem Abförderorgan für die Hartstoffe verbunden oder dem Stegkettenförderer zugeordnet ist. Das Austragsende des Stegkettenförderers ist durch zumindest einen weiteren Zwischenförderer mit dem Abförderorgan für die Hartstoffe verbunden. Bevorzugt findet sich zwischen dem an den Kurzförderer anschließenden als Teleskopschacht ausgebildeten ersten Zwischenförderer einerseits und dem horizontalen Stegkettenförderer andererseits wenigstens ein Schieber, welcher eine Weiche im Förderweg bildet ; in einer Endstellung fließt der Kompost dem Stegkettenförderer zu, in der anderen Endstellung des Schiebers fällt der Kompost am Stegkettenförderer vorbei auf eine unter ihm angebrachte Bodenplatte. Dieser wird der Kompost insbesondere dann zugeleitet, wenn ein verhältnismäßig grober Kompost zu legen ist ; der Kompost wird über eine Kante der Bodenplatte abgeschoben ; die oberfläche der so entstehenden Schicht verlängert den Gleitweg für die nachfolgenden Partikel. Jede Kante der Bodenplatte begrenzt eine Ausnehmung, durch welche der den Siebboden des Stegkettenförderers verlassende Kompost fallen kann. Die Ausnehmung begrenzt damit das Ausmaß des entstehenden Schüttkegels, der noch mittels einer der Ausnehmung zugeordneten Abstreifkante der Fördereinrichtung an seiner Oberfläche geglättet werden kann. Jene Abstreifkante kann als festliegender Bestandteil der Fördereinrichtung ausgebildet oder aber beweglich angebracht sein, beispielsweise unter Zwischenschaltung von Teleskopträgern ; damit ist der Abstand der Abstreifkante von der Lagerfläche einstellbar und/oder die Fördereinrichtung quer zu ihrer Förderrichtung in einem der Breite der Ausnehmung entsprechenden Maß schrittweise automatisch fahrbar.

Es können zur Steuerung des Fördervorganges wenigstens an einer Schmalkante der Ausnehmung Kontrollorgane zur Füllstandmessung vorgesehen sein.

Im Rahmen der Erfindung liegen hydraulisch oder pneumatisch bewegbare und elektronisch gesteuerte Teleskopsäulen an der Vorrichtung, welche die Relativbewegungen zwischen der Ladebrücke einerseits und der eigentlichen Fördereinrichtung und/oder dem Fräswerk andererseits erlauben. Die Fördereinrichtung bildet mit dem Fräswerk und den zusätzlichen Belüftungslanzen eine Kompakte Einheit, deren Einzelelemente — auch voneinander unabhängig — gesteuert werden können.

Durch die Kompaktanlage kann ein in einem Koordinatensystem gesteuertes Fräsen, ein Befeuchten der Miete aus Kompost oder einem anderen Kompostierfähigen Material sowie die sehr wirkungsvolle Belüftung durch die beschriebenen Lanzen durchgeführt werden — letzteres jedoch nur bei Stillstand der Ladebrücke.

Die Zangsbelüftung wird von einer elektronischen Koordinatensteuerung kontrolliert, so daß jede Stelle der Kompostmiete belüftet wird. Als weiterer Vorteil ergibt sich, daß durch das Einstechen der Belüftungslanzen Hohlräume oder Pfeifen entstehen, welche nach dem Herausnehmen der Lanzen ein Belüftungssystem bilden.

Die erfindungsgemäße Preßvorrichtung weist bewegbare Preßkanäle zum Herstellen von Preßlingen auf, wobei jeder Preßkanal ein Stapelorgan für die Preßlinge bildet. Die über dem Stapelpaltz bewegbare bandartige Fördereinrichtung ist mit einer entlang der Ladebrücke und rechtwinkelig zu ihr bewegbaren Preßvorrichtung verbunden. Das Pressen erfolgt mittels Huborganen, durch die die Preßrichtung festgelegt ist. Die Preßvorrichtung ist zwischen Ladebrücke und der Fläche des Stapelplatzes steuerbar verfahrbar.

Als besonders günstig hat es sich erwiesen, zwischen Preßkanal und der zugeordneten Fördereinrichtung wenigstens einen Bunker vorzusehen, der den von der Fördereinrichtung herangebrachten Rohkompost aufnimmt und an den Preßkanal gesteuert weitergibt, wozu der Bunkerboden bevorzugtermaßen als Förderorgan ausgebildet und/oder dem Bunkeraustrag eine Dosiereinrichtung zugeordnet ist, um eine geregelte Aufgabe des Rohkompostes auf die einzelnen Preßkanäle zu gewährleisten.

Der Preßkanal wird vor dem Preßvorgang und auch während des Preßvorganges mit einem zugeordneten Umwuchtorgan in Vibration versetzt, um die Verdichtung des Preßlings zu beschleunigen. Dabei gegebenenfalls austretende Flüssigkeit wird unterhalb des Preßkanals gesammelt und Sprühdüsen zugeführt. Diese sind so angebracht, daß sie die bereits gestapelten Preßlinge mit der gesammelten Flüssigkeit benetzen.

Preßkanal und/oder Preßvorrichtung sind nach jedem Preßvorgang automatisch horizontal verschiebbar, um das Absetzen des entstandenen Preßlings auf dem Boden des Stapelplatzes oder auf einem anderen Preßling zu vereinfachen. Zusätzlich oder statt der Bewegbarkeit von Preßvorrichtung oder Preßkanal können Boden und/oder Wandung des Preßkanals im Bereich des Austrages verschiebbar oder abklappbar sein, so daß der Preßling ohne weiteres herauszuleiten vermag. Bevorzugtermaßen ist die Preßvorrichtung voll automatisch gesteuert und zwar so, daß sie zur säulenartigen Stapelung der Preßlinge etwa um deren Höhe stufenweise versetzt oder zur Bildung von Preßlingstapeln in verschiedenen Formen sogenannter Mauerverbände bewegt wird.

Hierzu weist die Preßvorrichtung eine horizontale Reihe von mehreren nebeneinander vorgesehenen Preßkanälen und/oder mehrere Preßkanäle übereinander auf.

Es können zumindest im Bereich des Fräswerkes Sprühdüsen zur Benetzung des aus den Preßlingen entstehenden Fräsgutes vorgesehen und mit Rinnen zum Sammeln von Filtrat verbunden sein, welches während des Preßvorganges entsteht und wiederum der Mieten — oder Preßlingsbenetzung zu dienen vermag.

Als großer Vorteil bei der Belüftung des Kompostes ist die Ausgestaltung der Lagerfläche anzusehen, die mit Luftführungskanälen versehen ist sowie etwa rasterförmig angeordnete Luftöffnungen aufweist. Gegebenenfalls sind dabei zumindest einigen der Luftöffnungen Zwischenräume zwischen den gestapelten Presslingen zugeordnet, die dann problemlos mit Luft versorg werden können.

Die Erfindung wird in der nachfolgenden Beschreibung bevorzugter Ausführungsbeispiele sowie anhand der Zeichnungen näher erläutert. Diese zeigen in :

Fig. 1 : eine Müll-Kompostierungsanlage in schematischer Darstellung ;

Fig. 2 : einen vergrößerten Detailschnitt nach Linie II-II mit Vorderansicht einer Ladebrücke ;

Fig. 3 : die Ladebrücke nach Fig. 2 in Seitenansicht in einem vergrößerten Teilschnitt durch die Anlage der Fig. 1, gemäß deren Linie III-III ;

Fig. 4 : einen vergrößerten Detailschnitt zu einer anderen Ausführungsform, welcher etwa der Linie IV-IV in Fig. 1 folgt ;

Fig. 5 : der — im Anschluß an die rechte Seite der Fig. 4 — weitergeführte Schnitt durch die Anlage ;

Fig. 6 : einen vergrößerten Detailschnitt, jedoch zu einem anderen Ausführungsbeispiel der Ladebrücke, etwa nach Linie II-II der Fig. 1 ;

Fig. 7 : die Ladebrücke nach Fig. 6 in Seitenansicht in einem vergrößerten Teilschnitt etwa gemäß Linie III-III in Fig. 1.

Eine Anlage zur Aufbereitung und Kompostierung von gegebenenfalls mit Klärschlamm versetztem Müll weist nach einer Brückenwaage 1 an der Annahmestelle A einen Tiefbunker 2 auf. Über diesem ist ein Greifer 3 vorgesehen, welcher Müll M chargenweise aus dem Tiefbunker 2 einem Dosiersilo 4 zuführt. Von diesem gelangt der Müll M über ein Förderband 5 und eine Dosiereinrichtung 6 zu einer Hammermühle 7. Der darin zerkleinerte Müll M wird auf einem Trogkettenförderer 8 zu einem Magnetabscheider 9 gebracht, der einerseits ausgesonderten Schrott S an eine Schrottpresse 10 sowie anderseits den nun schrottfreien — mit dem Absetzschlamm U am Unterlauf eines Klärschlammbeckens 11 zusammengeführten — Müll M an eine Drehtrommel 12 abgibt. An deren Austrag 13 erfolgt eine Trennung des Rohkompostes K von groben Siebresten R ; letztere trägt ein weiterer Trogkettenförderer 14 zu einem Siebrestbunker 15.

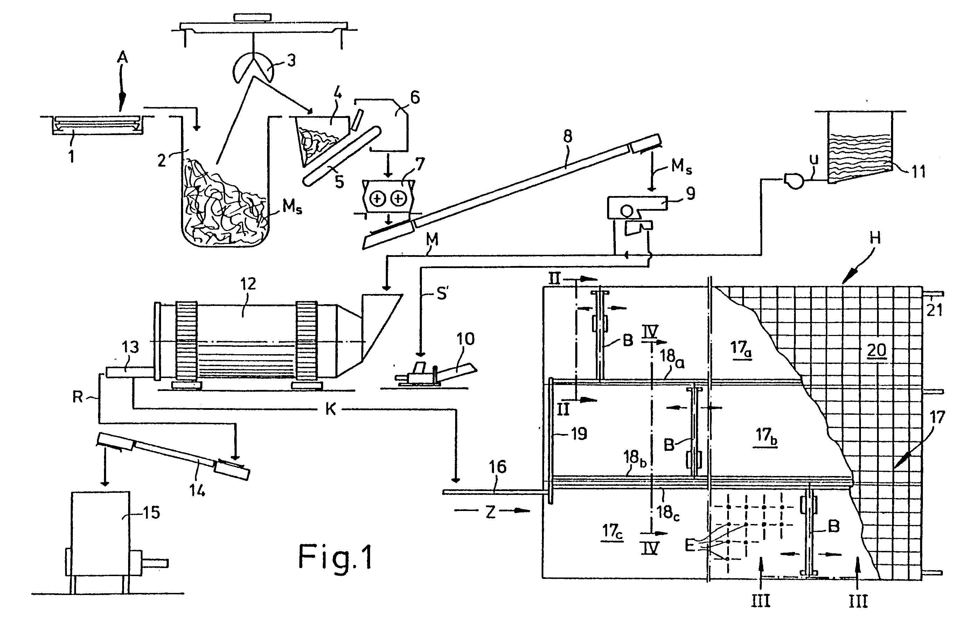

Der Rohkompost K wird auf einem Förderer 16 zu einer Lagerfläche 17 bzw. einer Rottehalle H gebracht (in Fig. 1 in Draufsicht).

Die Lagerfläche 17 ist in dem für Fig. 1 ausgewählten Beispiel in Aufgaberichtung z in drei Lagerflächen $17_a$, $17_b$, $17_c$ unterteilt, die jeweils an einer Lagerflächengrenze eine Förderstraße $18_a$, $18_b$, $18_c$ flankiert ; diese Förderstraßen 18 sind mit dem Förderer 16 durch ein querliegendes Förderband 19 verbunden, welches parallel zu drei — in und gegen die Aufgaberichtung z fahrbaren — Ladebrücken B verläuft.

Unterhalb des Bodens 20 jeder Lagerfläche $17_a$, $17_b$, $17_c$ ist gemäß Fig. 1 ein seitlicher Unterflurförderer 21 angebracht.

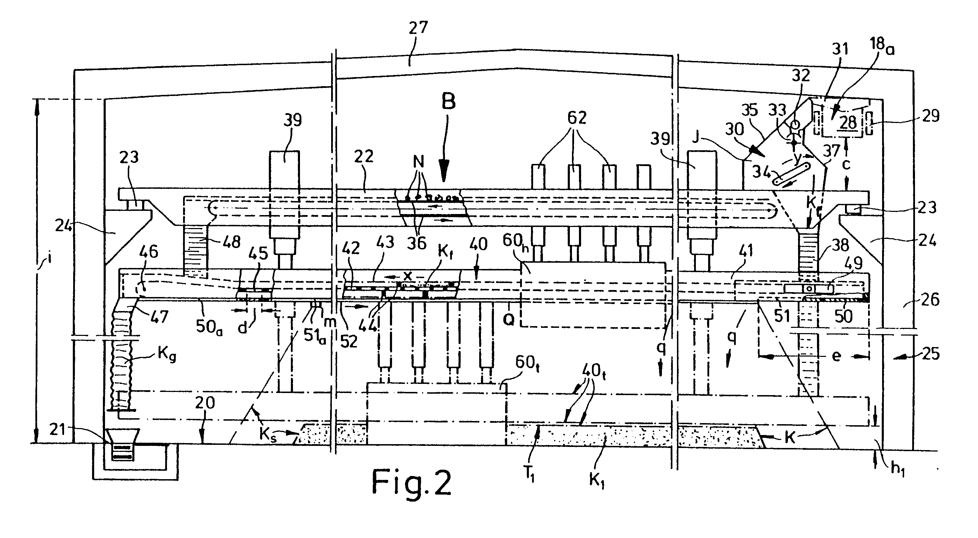

In Fig. 2 weist jede der Ladebrücken B Querträger 22 mit seitlichen Fahrwerken, z. B. Rollen 23, auf ; diese sind auf als Fahrsockel dienenden Kranbahnschienen 24 eines Traggerüstes 25 aus Vertikalbäumen 26 der Höhe i und Dachträgern 27 verfahrbar. Im Abstand c über dem in Fig. 2 rechten Ende des Querträgers 22 ist die Förderstraße $18_a$ in Form eines zwischen Trommeln 29 gespannten endlosen Bandes 28 erkennbar. Auf bzw. zwischen den Querträgern 22 der Ladebrücke B ist eine Übergabevorrichtung 30 angebracht, deren Abstreifsteg 31 den herangeführten Rohkompost K in den Innenraum J der Übergabevorrichtung 30 leitet, wo er von einer Verteilerschnecke 32 erfaßt und einem Zellenrad 33 aufgegeben wird. Dieses beschleunigt den Rohkompost K und wirft ihn gegen einen geneigten Kurzförderer 34 von verhältnismäßig kurzer Längserstreckung. Die Hartstoffpartikel N rutschen entweder dank der einstellbaren Neigung des Kurzförderers 34 von diesem ab oder prallen aufwärts gegen eine Prallplatte 35, die sie einem oberen Querförderer 36 zulenkt.

Der Feinkompost $K_f$ wird vom Kurzförderer 34 — oder bei einer nicht wiedergegebenen Ausführung von einem geneigten stationären Blech mit unterer Prallnase — ein Pfeilrichtung y mitgenommen und fällt an der jener Prallplatte 35 gegenüberliegenden Wand 37 der Übergabevorrichtung 30 abwärts durch einen längenveränderlichen Zwischenförderer 38, z. B. einen Teleskopschacht oder einen Faltenbalg auf eine unterhalb des Querträgers 22 angeordnete und mit diesem durch Hubelemente 39 in Form von Teleskopstempeln verbundene bandartige Fördereinrichtung 40. Der Abstand zwischen dieser und dem Querträger 22 ist mittels der Teleskopstempel der Hubelemente 39 verstellbar.

Hauptbestandteil der bandartigen Fördereinrichtung 40 ist ein zwischen Traversen 41 ruhender Siebboden 42, beidseits dessen unendliche Förderketten 43 an ihnen befestigte Querstege 44 in Förderrichtung x führen ; die erforderlichen Kettensterne und Antriebe sind in der Zeichnung übersichtlichkeitshalber vernachläßigt.

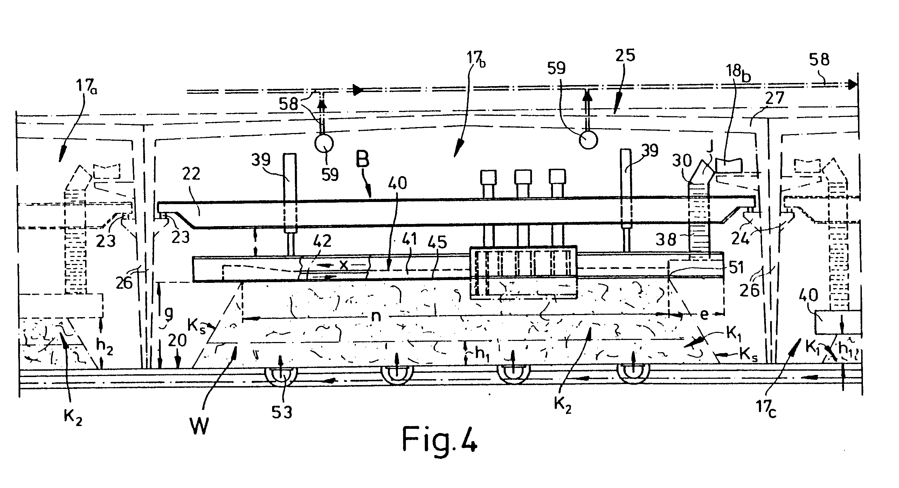

Der auf den Siebboden 42 fallende Feinkompost $K_f$ wird von den Querstegen 44 mitgenommen und fällt entlang des Förderweges der Länge n (Fig. 4) durch die Siebbodenöffnungen 45 abwärts ; auf dem Siebboden 42 verbleibende Grobteile $K_g$ werden am Haupt 46 des Stegkettenförderers 42-45 einem vertikalen längenveränderlichen Zwischenförderer 47 (« dritter Zwischenförderer ») in Form eines Teleskopschachtes übergeben und gelangen durch diesen auf den beschriebenen seitlichen Unterflurförderer 21 ; dieser trägt die Grobteile $K_g$ sowie die vom oberen Querförderer 36 durch einen weiteren längenveränderlichen Zwischenförderer 48 (« zweiter Zwischenförderer ») in Form eines Faltenbalges kommenden Hartstoffanteile N aus.

Wird Rohkompost K gefördert, dessen Korngröße w. über der Maschenweite d der Siebbodenöffnungen 45 liegt, öffnet man einen unter dem (in Fig. 2 rechten) Faltenbalg des Zwischenförderers 38 liegenden Schieber 49, durch welchen der Kompost K auf eine Bodenplatte 50 der Länge e fällt ; über deren Kante 51 kann der Kompost K in Pfeilrichtung g abwärts fallen.

Zur Herstellung einer ersten Kompostschicht $K_1$ der Höhe $h_1$ von beispielsweise 40 mm wird die Fördereinrichtung 40 an den hydraulisch oder pneumatisch betätigten Hubelementen 39 in die in Fig. 2 mit den Konturen $40_t$ angedeutete Position gesenkt, in welcher sie dank der Teleskopschächte der Zwischenförderer 38, 47, 48 an die Zu- und Abförderorgane $18_a$, 21, 36 angeschlossen bleibt. Im Bereich der seitlich durch die Bodenblechkante 51 und (in Fig. 2 links) $51_a$ einer anderen Bodenplatte $50_a$ begrenzten Ausnehmung 52 der Fördereinrichtung 40 entsteht in beschriebener Weise ein Schüttkegel (Seitengrenzen $K_s$) mit durch die Abstreifkante/n Q der Fördereinrichtung 40 geglätteter Oberfläche $T_1$. Bei Förderung von großkörnigem Kompost K wird dieser über die Kanten 51 der Bodenplatte 50 und anschließend über die bereits vorhandene Oberfläche $T_1$ des Schüttkegels $K_2$ geschoben. Hier können zum Verteilen des Kompostes k die Mitnehmer oder Querstege 44 im Unterturm des Stegkettenförderers 42-45 in Pfeilrichtung x geführt werden ; die Förderrichtung des Stegkettenförderers 42 bis 45 ist also hier umgekehrt worden.

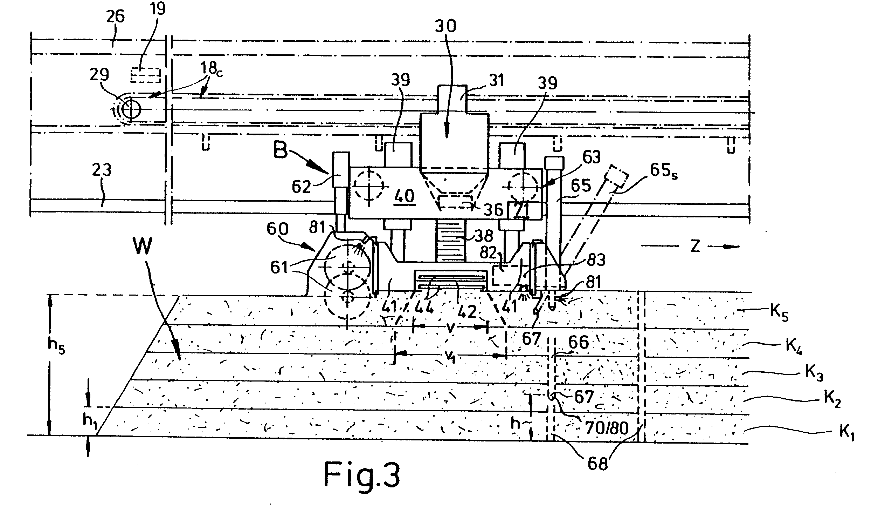

An den beiden Kanten 51, $51_a$ der Bodenplatte 50, $50_a$, welche die seitlichen Kanten des Schüttgutkegels $K_s$ oder der Kompostmiete W bestimmen, können elektrische Füllstandkontrollen m vorgesehen werden, welche den Fördervorgang überwachen und der Ladebrücke B einen Impuls geben, wenn sich jene um die Breite v (Fig. 3) des Stegkettenförderers 42-45 verschieben soll, um einen neuen Kompoststreifen $K_1$ anzusetzen. In dieser Weise sollen Kompostflächen von etwa 28 m Breite von 100 m Länge — der Höhe $h_1$ — hergestellt werden.

Fig. 3 zeigt eine Kompostmiete W der Höhe $h_5$ aus mehreren in beschriebener Form gelegten Kompostschichten $K_1$ bis $K_5$ in die ein Fräswerk 60 mit Fräswalzen 61 abgesenkt wird, um die nach längerer Standzeit verdichtete Kompostmiete W aufzulockern. Verschiedene Höhenlagen des an Huborganen 62 hängenden Fräswerkes 60 sind in Fig. 2 bei $60_h$ und $60_t$ angedeutet.

Mit der Ladebrücke B wird also die Kompostmiete W sowohl hergestellt als auch durchgefräst ; während die Herstellung der Kompoststreifen in Förderrichtung x geschieht, ziehen die Fräswalzen 61 Bahnen in oder gegen Pfeilrichtung z.

Auf der dem Fräswerk 60 gegenüberliegenden Frontseite 63 der Ladebrücke B sind längenveränderliche Belüftungslanzen 65 schwenkbar angebracht, deren Lanzenspitzen 66 vertikal oder geneigt — Kontur $65_s$ — in die Kompostmiete W in wählbarer Höhe h abgesenkt werden können. Die Lanzenspitzen 66 sind mit Blasdüsen 67 ausgerüstet, durch welche Luft an beliebigen Rasterpunkten E (Fig. 1) eingeblasen werden kann.

Nach dem Herausziehen der Belüftungslanzen 65 verbleiben in der Kompostmiete W sogenannte Pfeilen als zusätzliche Belüftungskanäle 68.

Sowohl die Fördertätigkeit während des Herstellens der Kompostmiete W als auch der Frässvorgang oder das Eindüsen der Luft an vorgewählten Rasterpunkten E wird vollautomatisch gesteuert, so daß jede Stelle der Kompostmiete optimal belüftet werden kann.

Beispielsweise ist es bei einer bevorzugten Ausführungsform der Belüftungslanzen 65 möglich, mittels an deren Lanzenspitzen 66 zusätzlich vorgesehener Temperaturfühler 70 die Komposttemperatur an bestimmten Stellen zu ermitteln und die Ist-Werte einer Regeleinrichtung 71 aufzugeben, in der die erforderliche Belüftung errechnet und anhand der resultierenden Werte die Steuerung der Anlage vorgenommen wird.

Bei einem weiteren Ausführungsbeispiel können an der Belüftungslanze 65 auch Druckmessorgane 80 — oder Probenahme-Einrichtungen — angebracht sein.

Mit 81 sind Sprühdüsen an Fräswerk 60 und Belüftungslanze 65 bezeichnet, mittels denen der Kompost K befeuchtet werden kann — auch die Wasserzufuhr vom Wassernetz oder einem Wasserbehälter 82 kann von der Regeleinrichtung 71 gesteuert werden.

Eine sich über die gesamte Länge der Fördereinrichtung 40 erstreckende Sprühanlage 83 dient auch dem genannten Zweck.

Die beschriebene Anlage ermöglicht es, die erforderliche Kompostierungsfläche möglichst gering zu halten und mit einer einzigen Ausführungsform einer Ladebrücke B die Förder- und Belüftungsvorgänge durchzuführen. Es kann auch die Sohle $K_1$ der in beliebiger Höhe entstehenden Kompostmiete W belüftet werden, die verbleibenden Belüftungskanäle 68 können rasterartig verteilt sein.

Die drei beschriebenen Vorgänge des Förderns, Fräsens und Belüftens sind bevorzugtermaßen elektrisch miteinander verriegelt, so daß jeder Arbeitsgang getrennt durch ein programmgesteuertes elektrisches System durchgeführt werden kann und zu einer modernen Flächenkompostierung mit guter zusätzlicher Zerkleinerung und hohem Belüftungseffekt führt.

In Fig. 4 ist das Verfahren zur Herstellung einer Kompostmiete W aus mehreren Schichten oder

Lagen $K_1$, $K_2$ usw. deutlich zu erkennen, wenn man die Lagerflächen $17_c$, $17_a$, $17_b$ in dieser Reihenfolge vergleicht.

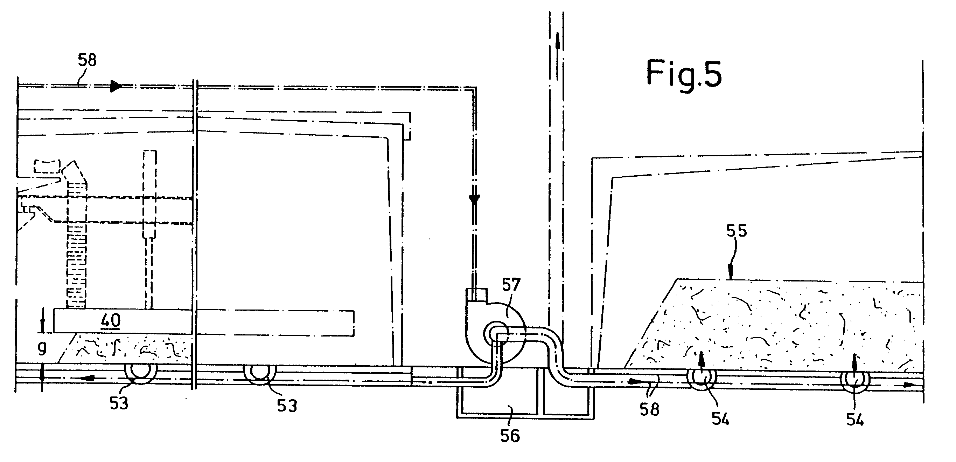

Oberhalb der Kompostmiete W befinden sich quer zur Förderrichtung x und zu der im Abstand g zum Boden 20 sich befindenden bandartigen Fördereinrichtung 40 verlaufende Absaugeinrichtungen 59, welche an ein Luftnetz 58 angeschlossen sind ; letzteres ist in Fig. 4, 5 durch strichpunktierte Doppellinien angedeutet und mit Lüftern 57 verbunden.

Durch das in der Rotte- oder Kompostierungshalle H befindliche Absaugsystem 59, 58 wird die Luft zum Lüfter 57 geführt ; ein geringer Teil der Luft bzw. der Gase wird wieder den einzelnen Kompostmieten durch Unterflurkanäle 53 zur Belüftung vom Boden her zugeführt. Ein anderer Teil wird durch Bodenbelüftungskanäle 54 zu einem Nachrotteplatz 55 gebracht.

Die Gase gelangen vom Lüfter 57 in einzelne Beruhigungskammern 56, wo das anfallende Kondenswasser über eine nicht wiedergegebene Sumpfpumpe aufzufangen und erneut in die Kompostierungsanlage einzubringen ist. Hierzu dienen Wasserdüsen im Bereich der Kompostmiete W ; diese Wasserdüsen sind der Übersichtlichkeit halber in der beigefügten Zeichnung vernachlässigt. Es entsteht ein geschlossener Kreislauf mit einer erheblichen Menge sogenannter Erdfilterflächen, welcher den Abgasen in verhältnismäßig kostengünstiger Weise umweltfeindliche Stoffe entzieht.

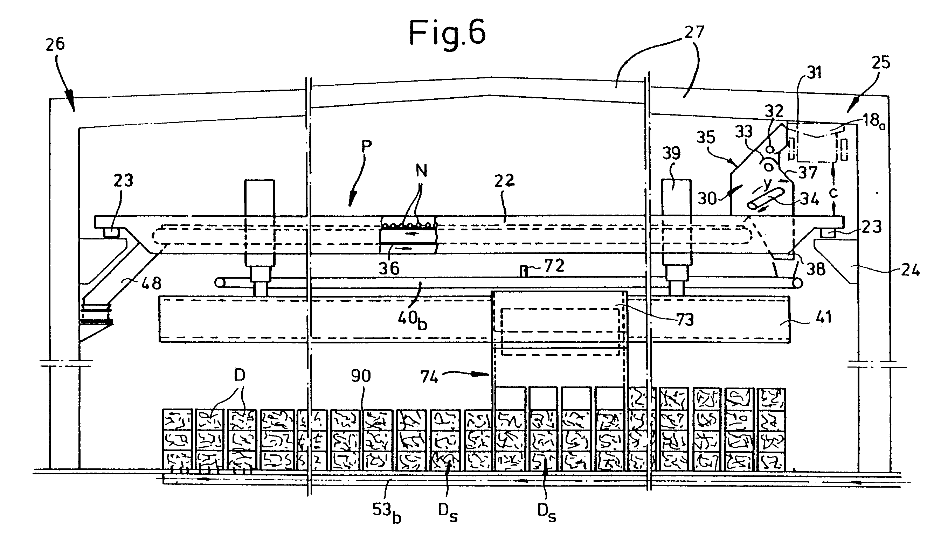

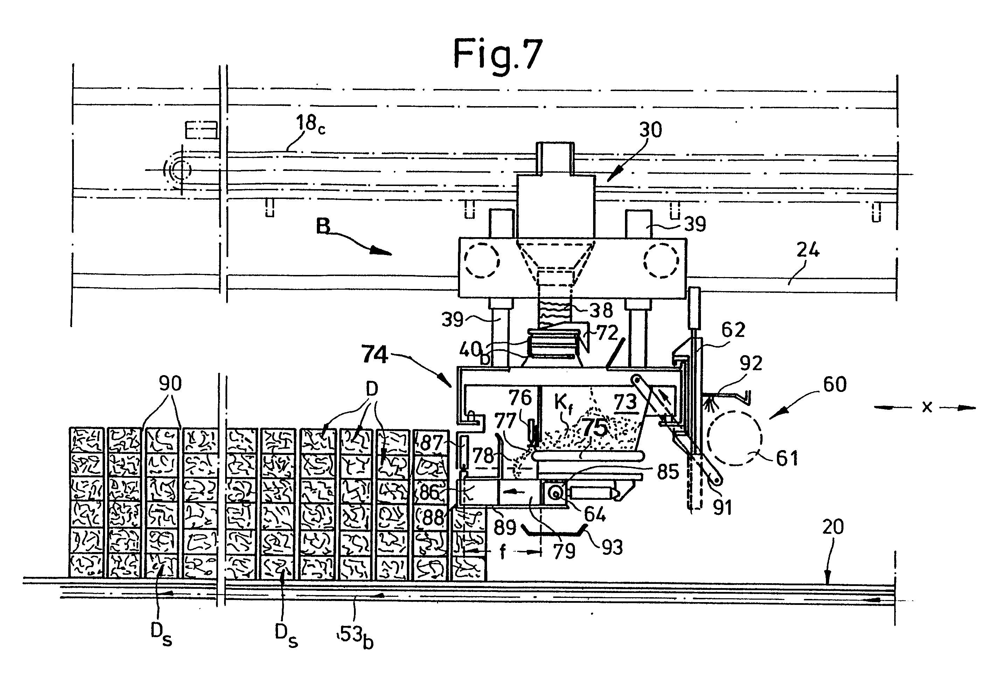

Der in der Vorrichtung nach Fig. 6, 7 verarbeitete Müll ist mit dem etwa 90 % Feuchtigkeit aufweisenden unentwässerten Absetzschlamm U des Klärschlammbeckens 11 (Fig. 1) zusammengeführt worden. Die Zuförderung des Mülls zur Ladebrücke 8 und dort durch die Übergabevorrichtung 30 auf den Querförderer 36 für Hartstoffpartikel N bzw. durch den längenveränderlichen Zwischenförderer 38 auf die bandartige Fördereinrichtung $40_b$ für Feinkompost $K_g$ erfolgt in der geschilderten Weise.

Der Feinkompost $K_f$ wird von der Fördereinrichtung $40_b$ durch Mitnehmer 72 abgeleitet und gleitet seitlich in den Bunker 73 einer Preßvorrichtung 74. Diese ist unterhalb des Querträgers 22 an der Traverse 41 angeordnet, welche von den Hubelementen 39 vertikal verschoben werden kann. So ist es auch möglich, die Preßvorrichtung 74 mit der Ladebrücke B in deren Förderrichtung x sowie quer zu dieser an der Traverse 41 zu verfahren.

Den Bunkerboden 75 bildet ein Förderband, welches den Feinkompost $K_f$ zu der mit einer Dosiereinrichtung 76 ausgestatten Austragöffnung 77 des Bunkers 73 und damit zu den unterhalb jener Austragsöffnung 77 vorgesehenen Einläufen 78 mehrerer Preßkanäle 79 führt. Sind diese gefüllt, drückt ein — jedem Preßkanal 79 zugeordneter — Preßstempel 85 den Feinkompost $K_f$ gegen eine die Kanalstirn bildende Preßplatte 86 und auf etwa ein Drittel der ursprünglichen Füllänge f zusammen. Die Preßstempel 85 arbeiten synchron oder bei einem nicht dargestellten Ausführungsbeispiel taktweise zueinander. Die Anzahl der Preßkanäle 79 je Preßvorrichtung 74 ist ebenso wählbar wie die Zahl der Preßvorrichtungen 74 je Ladebrücke B.

Während des Pressens von Preßlingen D wird der Feinkompost $K_f$ Vibrationen eines Umwuchtorgans 64 unterworfen, um eine Vorverdichtung des zu pressenden Materials zu erreichen.

Nach dem Pressen der Preßlinge D werden die Preßplatten 86 durch Hubelemente 87 vom Pressenmaul 88 entfernt und die Preßlinge D ausgeschoben. Hierzu wird entweder der Preßkanal 79 — bzw. die gesamte Preßvorrichtung 74 — oder der bewegbare Boden 89 des Preßkanals durch einen in der Zeichnung nicht dargestellten Mechanismus zurückgezogen, um die Preßlinge D unmittelbar am Stepelplatz absetzen zu können.

Die Stepelung der Preßlinge D erfolgt schichtweise in voneinander getrennten Säulen $D_s$, zwischen denen gemäß Fig. 6, 7 vertikale Kanäle 90 entstehen ; diese sind durch in der Zeichnung nicht erkennbare Bodenlöcher an das Luftzuführnetz $53_b$ angeschlossen, so daß eine gute Belüftung der Stapel von Preßlingen erfolgt. Bei einem anderen Ausführungsbeispiel können die Preßlinge D in der Art eines Läufer- oder Binderverbandes — also in zueinander versetzten Reihen — gestapelt werden, um eine bessere Standfestigkeit zu erhalten ; dabei werden die einzelnen Preßlinge D zueinander in Abstand aufgesetzt, um die horizontale Durchlüftung zu gewährleisten. Auch andere Mauerverbände sind als Muster für die Stapelung der Preßlinge möglich.

Die Preßlinge D werden in der gestapelten Form etwa zwanzig Tage gehalten und anschließend durch das Fräswerk 60 mit Fräswalzen 61 durchgefräst und somit Bestandteil einer Kompostmiete. Das Fräswerk 60 ist gemäß Fig. 7 an der Preßvorrichtung 74 vorgesehen und mittels des Huborgans 62 vertikal beweglich.

Das während des Fräsvorganges aus den Preßlinge D entstehende Haufwerk wird mittels eines Förderbandes 91 erneut der Preßvorrichtung 74 bzw. deren Bunker 73 zugeleitet. Vor und/oder während des Fräsvorganges sorgen Sprühdüsen 92 für eine Benetzung der Preßlinge D bzw. des aus ihnen gefrästen Haufwerkes. Diese — und auch andere in der Zeichnung nicht dargestellte — Sprühdüsen 92 werden mit Brauchwasser oder mit Filtrat gespeist ; letzteres kann während des Preßvorganges entstehen und wird dann in Rinnen 93 gesammelt. Die Sprühwasserleitungen sind in der Zeichnung vernachläßigt.

### Patentansprüche

1. Vorrichtung zum Aufbereiten vom Rohkompost auf einer Lagerfläche (17a, 17b, 17c) mittels einer dieser überspannenden und verfahrbaren Ladebrücke (B) mit einer bandartigen Fördereinrichtung (40) sowie einem an der Ladebrücke (B) angeordneten, zu der Lagerfläche (17) gerichteten Austrag für den Rohkompost, welcher durch Zwischenförderer (38, 48) auf die bandartige Fördereinrichtung (40) gebracht sowie unterhalb der Ladebrücke (B) als Kompostmiete (W) aufgesetzt werden kann, dadurch gekennzeichnet. daß die Ladebrücke (B) mit wenigstens einem Hubelement (39) versehen ist, an dem die etwa horizontale bandartige Fördereinrichtung (40) vertikal bewegbar angeordnet ist. daß die Fördereinrichtung den Austrag für den Rohkompost bildet, daß die Fördereinrichtung an der Ladebrücke (B) durch einen längenveränderlichen Zwischenförderer (38) angeschlossen ist, und daß an der Ladebrücke (B), oder an zumindest einem Huborgan (62) der Ladebrücke (B) ein zur Auflockerung dienendes Fräswerk (60) angeordnet ist.

2. Vorrichtung nach Anspruch 1, dadurch gekennzeichnet, daß an der Ladebrücke (B) oder an dem Hubelement (39) wenigstens eine Preßvorrichtung (74) mit bewegbaren Preßkanälen (79) zum Herstellen von Preßlingen (D) angeordnet ist, und daß der Preßkanal (79) ein Stapelorgan für die Preßlinge (D) bildet oder mit einem solchen Organ versehen ist.

3. Vorrichtung nach Anspruch 1 oder 2, dadurch gekennzeichnet, daß an der Ladebrücke (B) oder an wenigstens einem Hubelement zumindest eine gegebenenfalls längenveränderliche Belüftungslanze (65) bewegbar angebracht sowie mit einer Luftzuführung und gegebenenfalls mit Flüssigkeits-Sprühdüsen (81), verbunden ist.

4. Vorrichtung nach Anspruch 3, dadurch gekennzeichnet, daß an der Belüftgungslanze (65) zumindest im Bereich der Lanzenspitze (66) Temperaturfühler (70) und/oder wenigstens eine Blasdüse (67) und/oder Druckmeßorgane (80) angebracht sind/ist.

5. Vorrichtung nach Anspruch 4, dadurch gekennzeichnet, daß die Temperaturfühler (70) und/oder die Flüssigkeits-Sprühdüsen (81) mit einer Regeleinrichtung (71) verbunden sind, welche an ein Steuergerät zur Betätigung der Belüftungslanzen (65) und/oder oder Blasdüse/n (67) und/oder der Flüssigkeits-Sprühdüsen (81) angeschlossen ist.

6. Vorrichtung nach einem der Ansprüche 1 bis 5, dadurch gekennzeichnet, daß das Fräswerk (60) und/oder die Belüftungslanze/n (65) und/oder die Temperaturfühler (70) oder Druckmeßorgane (80) und/oder die Blasdüse/n (67) mit einem Steuergerät für koordinatenmäßige Bewegungen verbunden sind, wobei das Steuergerät zur Ansteuerung eines Punktes in einem wenigstens zweidimensionalen Koordinatensystems (Rasterpunkte E) ausgebildet ist.

7. Vorrichtung nach einem der vorhergehenden Ansprüche, dadurch gekennzeichnet, daß als Fräswerk (60) wenigstens zwei Fräswalzen (61) an teleskopartig ausgebildeten vertikalen Huborganen (62), deren Bewegungen steuerbar sind, vorgesehen sind.

8. Vorrichtung nach einem der vorhergehenden Ansprüche, dadurch gekennzeichnet, daß die Fördereinrichtung (40) vertikal etwa bis zur Lagerfläche (17$_a$, 17$_b$, 17$_c$) absenkbar ist.

9. Vorrichtung nach einem der vorhergehenden Ansprüche, dadurch gekennzeichnet, daß die Fördereinrichtung (40) als Stegkettenförderer (42 bis 45) mit um einen horizontal gerichteten Siebboden (42) laufenden Querstegen (44) ausgebildet ist. daß der Stegkettenförderer (42 bis 45) — gegebenenfalls über eine verfahrbare Übergabevorrichtung (30) — durch den ersten Zwischenförderer (38) an die Förderstaße (18$_a$, 18$_b$, 18$_c$) angeschlossen ist, und daß der Antrieb des Stegkettenförderers gegebenenfalls umkehrbar ist.

10. Vorrichtung nach einem der vorhergehenden Ansprüche, dadurch gekennzeichnet, daß zwischen der Förderstraße (18$_a$, 18$_b$, 18$_c$) und der Fördereinrichtung (40) — vorzugsweise am Übergang zwischen Förderstraße und dem ersten Zwischenförderer (38) eine verfahrbare Übergabevorrichtung (30) angeordnet ist, in der sich in der Bewegungsbahn des Rohkompostes (K) an einer horizontalen Welle ein Organ zur Partikelbeschleunigung, vorzugsweise ein Zellenrad (33), ein darunter angeordneter und zur Lagerfläche (17$_a$, 17$_b$, 17$_c$) geneigt laufender und gegebenenfalls in seiner Neigung einstellbarer Kurzförderer (34) und eine parallel zur Zellenradwelle sowie zu ihr in horizontalem Abstand angeordnete Prallplatte (35) befindet, und daß unterhalb der Prallplatte (35) ein Querförderer (36) zur Aufnahme von Hartstoffen (N) so angeschlossen ist, daß die Hartstoffe (N) von dem geneigt laufenden Kurzförderer (34) gegen die Prallplatte (35) und von dieser zum Querförderer (36) abschleuderbar sind (Fig. 2).

11. Vorrichtung nach Anspruch 10, dadurch gekennzeichnet, daß am Austragsende des Querförderers (36) wenigstens ein längenveränderlicher zweiter Zwischenförderer (48) angeordnet ist, der entweder direkt mit einem Unterflurförderer (21) für die Hartstoffe (N) verbunden oder dem Stegkettenförderer (42 bis 45) zugeordnet ist, dessen Austragsende durch zumindest einen längenveränderlichen dritten Zwischenförderer (47) mit dem Unterflurförderer verbunden ist.

12. Vorrichtung nach einem der Ansprüche 1 bis 11, dadurch gekennzeichnet, daß zwischen dem längenveränderlichen ersten Zwischenförderer (38) und dem Stegkettenförderer (42 bis 45) wenigstens ein Schieber (49) angeordnet ist, der als Weiche des Förderweges zwischen dem Stegkettenförderer (42 bis 45) und einer unterhalb des Aufgabebereiches des Stegkettenförderer (42 bis 45) angebrachten ersten Bodenplatte (50) dient.

13. Vorrichtung nach Anspruch 12, dadurch gekennzeichnet, daß im Bereich des Hauptes (46) des Stegkettenförderers eine zweite Bodenplatte (50) vorgesehen ist und daß die Fördereinrichtung (40) wenigstens eine im Bereich zwischen den Bodenplatten verlaufende Abstreifkante (Q) aufweist.

14. Vorrichtung nach Anspruch 13, dadurch gekennzeichnet, daß wenigstens an einer Kante (51, 51$_a$) der Bodenplatten (50, 50$_a$) Kontrollorgane zur Füllstandmessung vorgesehen sind.

15. Vorrichtung nach wenigstens einem der Ansprüche 13 oder 14, dadurch gekennzeichnet, daß der Abstand der Abstreifkante (Q) von der Lagerfläche (17$_a$, 17$_b$, 17$_c$) einstellbar und/oder

die Fördereinrichtung (40) quer zu ihrer Förderrichtung (x) in einem der Breite (v) des Stegkettenförderers entsprechenden Maß schrittweise automatisch fahrbar ist.

16. Vorrichtung nach einem der vorhergehenden Ansprüche, dadurch gekennzeichnet, daß die Preßvorrichtung (74) zwischen Ladebrücke und Lagerfläche (17$_a$, 17$_b$, 17$_c$) automatisch verfahrbar ist.

17. Vorrichtung nach einem der Ansprüche 2 bis 16, dadurch gekennzeichnet, daß zwischen einem etwa horizontalen Preßkanal (79) und der Fördereinrichtung (40) wenigstens ein Bunker (73) vorgesehen ist, dessen Bunkerboden (75) als Förderorgan ausgebildet und/oder dessen Austragsöffnung (77) eine Dosiereinrichtung (76) zugeordnet ist.

18. Vorrichtung nach Anspruch 17, dadurch gekennzeichnet, daß der Preßkanal (79) mit einem Umwuchtorgan (64) verbunden ist und/oder daß der an einem Ende ein bewegbares Pressenmaul (86) sowie am anderen Ende einen Preßstempel (85) aufweist.

19. Vorrichtung nach Anspruch 17 oder 18, dadurch gekennzeichnet, daß der Preßkanal (79) und/oder die Preßvorrichtung (74) nach jedem Preßvorgang automatisch horizontal verschiebbar oder daß der Boden (89) oder eine Wand des Preßkanals im Bereich des Pressenmauls (88) zum Stapeln der Preßlinge (D) ortsveränderlich ausgeführt ist/sind.

20. Vorrichtung nach einem der Ansprüche 17 bis 19, dadurch gekennzeichnet, daß sie eine horizontale Reihe von mehreren nebeneinander vorgesehenen Preßkanälen (79) und/oder mehrere Preßkanäle (79) übereinander aufweist.

21. Vorrichtung nach einem der Ansprüche 1 bis 20, dadurch gekennzeichnet, daß zwischen Fräswerk (60) und Preßvorrichtung (74) bzw. Bunker (73) wenigstens ein Förderband (91) vorgesehen ist.

22. Vorrichtung nach einem der Ansprüche 1 bis 21, dadurch gekennzeichnet, daß zumindest im Bereich des Fräswerks (60) Sprühdüsen (92) zur Benetzung des aus den Preßlingen (d) entstehenden Fräsgutes vorgesehen und mit Rinnen (93) zum Sammeln von Filtrat verbunden sind, welches während des Preßvorganges entsteht.

23. Vorrichtung nach einem der Ansprüche 1 bis 22, dadurch gekennzeichnet, daß die von ihr überspannte Lagerfläche (17$_a$, 17$_b$, 17$_c$) mit der Luftzufuhr dienenden Kanälen (53) versehen ist sowie etwa rasterförmig angeordnete Luftöffnungen aufweist, und daß über der Kompostmiete (W) wenigstens eine Absaugeinrichtung (59) für Gase angeordnet und an wenigstens einen Lüfter (57) angeschlossen ist, dessen Ausblasende mit einem Belüftungssystem (53, 54) der Kompostmiete (W) und/oder eines Nachrotteplatzes (55) verbunden ist.

24. Vorrichtung nach Anspruch 23, dadurch gekennzeichnet, daß im Gaskreislauf (59, 58, 53) wenigstens ein Kondensatabscheider in Form einer Beruhigungskammer (56) vorgesehen und gegebenenfalls mit Sprühorganen über der Kompostmiete (W) und/oder über dem Nachrotteplatz (55) verbunden ist.

## Claims

1. A device for preparing raw compost on a storage surface (17$_a$, 17$_b$, 17$_c$) by means of a displaceable loading bridge (B) spanning over same with a band-like conveyor device (40) as well as a delivery for the raw compost arranged on the loading bridge (B) and facing the storage surface (17) which compost can be put on the band-like conveyor device (40) by intermediate conveyors (38, 48) and can be stacked up below the loading bridge (B) as compost heap (W), characterized in that the loading bridge (B) is provided with at least one lift element (39) on which the approximately horizontal band-like conveyor device (40) is provided perpendicularly in a movable manner, that the conveyor device produces the delivery for the raw compost, that the conveyor device is connected to the loading bridge (B), via an intermediate conveyor (38) of variable length, and that on the loading bridge (B), or at least on a lift element (62) of the loading bridge (B), there is arranged a milling device (60) for loosening purposes.

2. A device according to claim 1, characterized in that on the loading bridge (B) or on the lift element (39) there is arranged at least one pressing device (74) with movable press channels (79) to produce compacts (D), and that the press channel (79) forms a stacking member for the compacts or is provided with such a member.

3. A device according to claim 1 or 2, characterized in that on the loading bridge (B) or at least on one lift element an aeration lance (65) of variable length is movably arranged and connected with an air feed and possibly with liquid spray nozzles (81).

4. A device according to claim 3, characterized in that on the aeration lance (65) there are arranged, at least in the region of the tip (66) of the lance, temperature sensors (70) and/or at least one blast nozzle (67) and/or pressure measurement elements (80).

5. A device according to claim 4, characterized in that the temperature sensors and/or the liquid spray nozzles (81) are connected with a controlling means (71) which is connected to a control device for actuating the aeration lances (65) and/or the blast nozzle/s (67) and/or the liquid spray nozzles (81).

6. A device according to at least one of claims 1 to 5, characterized in that the milling device (60) and/or the aeration lance/s (65) and/or the temperature sensors (70) or pressure measurement means (80) and/or the blast nozzle/s (67) are connected with a control device for coordinate-like movements, the control device being possibly developed for controlling a point in an at least two-dimensional coordinate systems (half-tone dots E).

7. A device according to any of the preceding claims, characterized in that as milling device (60) there are provided at least two milling cylinders (61) on telescopically developed vertical lift elements (62), the movements of which cylinders can be controlled.

8. A device according to any of the preceding claims, characterized in that the conveyor element (40) can be vertically lowered approximately to the storage surface ($17_1$, $17_b$, $17_c$).

9. A device according to any of the preceding claims, characterized in that the conveyor device (40) is developed as a rake-type chain conveyor (42 to 45) with cross rakes (44) extending around an approximately horizontally directed perforated bottom (42), that the rake-type chain conveyor (42 to 45) is connected — possibly via a movable transfer device — via the first intermediate conveyor (38) to the feed means ($18_a$, $18_b$, $18_c$), and that the drive of the rake-type chain conveyors is possibly reversible.

10. A device according to any of the preceding claims, characterized in that between the feed means ($18_a$, $18_b$, $18_c$) and the conveyor device (40) — preferably at the transition between the feed means and the first intermediate conveyor (38) — there is arranged a movable transfer device (30), in which there are provided within the path of movement of the raw compost (K) on a horizontal shaft a member for the acceleration of particles, preferably a bucket wheel (33), a short conveyor (34) arranged below same and traveling inclined to the storage surface ($17_a$, $17_b$, $17_c$) and possibly being of adjustable inclination, and an impact plate (35) provided approximately parallel to the bucket wheel shaft and spaced horizontally from it, and that below the impact plate (35) a cross conveyor (36) for receiving hard materials (N) is connected in such a way that the hard materials (N) can be slung by the inclined short conveyor (34) against the impact plate (35) and from the latter to the cross conveyor (36) (Fig. 2).

11. A device according to claim 10, characterized in that at the outlet end of the cross conveyor (36) there is arranged at least one second intermediate conveyor (48) of variable length which is either connected direct with an underfloor conveyor (21) for hard materials (N) or is associated with the rake-type chain conveyor (41 to 45) whose discharge end is connected by at least one third intermediate conveyor (47) of variable length with the underfloor conveyor.

12. A device according to any of claims 1 to 11, characterized in that between the first intermediate conveyor (38) of variable length and the rake-type chain conveyor (42 to 54) there is arranged at least one slide gate (49) which is provided as a switch for the conveyance path between the rake-type chain conveyor (42 to 45) and a first bottom plate (50) arranged below the feeding region of the rake-type chain conveyor (42 to 45).

13. A device according to claim 12, characterized in that in the region of the head (46) of the rake-type chain conveyor there is provided a second bottom plate (50), and that the conveyor device (40) is provided with at least one scraping edge (Q) or the like extending in the region between the bottom plates.

14. A device according to claim 13, characterized in that control members for measurement of level are provided at least one edge (51, $51_a$) of the bottom plates (50, $50_a$).

15. A device according to one of claims 13 or 14, characterized in that the distance of the scraping edge (Q) from the storage surface ($17_a$, $17_b$, $17_c$) is adjustable and/or the conveyor device (40) is movable automatically stepwise transverse to its direction of conveyance (x) by an amount corresponding approximately to the width (v) of the rake-type chain conveyor.

16. A device according to any of the preceding claims, characterized in that the pressing device (74) is movable automatically between conveyor bridge and storage surface ($17_a$, $17_b$, $17_c$).

17. A device according to claim 13, characterized in that between the approximately horizontal press channel (79) and the conveyor device (40) there is provided at least one bunker (73) whose bottom (75) is developed as a conveyor member and/or whose outlet opening (77) is associated with a dosaging element (76).

18. A device according to claim 17, characterized in that the press channel (79) is connected with a balancing element (64) and/or has at one end a movable press mouth (86) and at the other end a press piston (85).

19. A device according to claim 17 or 18, characterized in that the press channel (79) and/or the press device (74) are automatically horizontally displacable after each pressing process and that the bottom (89) or a wall of the press channel in the region of the press mouth (88) is movable in space for the stacking of the compacts (D).

20. A device according to one of claims 17 to 19, characterized in that it has a horizontal row of a plurality of press channels (79) arranged alongside of each other and/or a plurality of press channels one above the other.

21. A device according to one of claims 1 to 20, characterized in that a conveyor belt (91) is provided between milling device (60) and press device (74) or bunker (73).

22. A device according to any of claims 1 to 21, characterized in that at least in the region of milling device (60) spray nozzles (92) are provided for wetting the milled material coming from the compacts (D) and are connected with channels (93) for collecting filtrate which is produced during the pressing process.

23. A device according to at least one of claims 1 to 22, characterized in that the storage surface ($17_a$, $17_b$, $17_c$) extended over by it is provided with air feed channels (53) and has air openings arranged approximately in checkerboard form, and that over the compost heap (W) there is arranged at least one exhaust device (59) for gases, which is connected with a blower (57) whose blow-out end is connected with an aeration system (53, 54) of the compost heap (W) and/or an after-retting place (55).

24. A device according to claim 23, characterized in that at least one condensate separator developed as a stabilization chamber (56) is provided in the gas circuit (59, 58, 53) and is possibly connected with spray members over the compost heap (W) and/or over the after-retting place (55).

## Revendications

1. Installation pour la préparation de matières à composter sur une surface de stockage (17a, 17b, 17c) moyennant un pont de chargement (B) déplaçable et jetant sur celle-ci avec un transporteur (40) semblable à une bande et une décharge placée au pont de chargement (B), dirigée vers la surface de stockage (17) et destinée aux matières à composter qui peuvent être mises sur le transporteur semblable à une bande (40) moyennant des transporteurs intermédiaires (38, 48) et mises en meule (W) au-dessous du pont de chargement (B), caractérisée en ce que le pont de chargement (B) possède au moins un élément élévateur (39) auquel est fixé de manière verticalement mobile le transporteur semblable à une bande qui est à peu près horizontale (40), que le transporteur constitue la décharge pour les matières à composter, que le transporteur est lié au pont de chargement (B) moyennant un transporteur intermédiaire (38) qui est réglable en longueur, et qu'un dispositif à fraiser (60) destiné à l'ameublissement est placé au pont de chargement (B) ou à au moins un organe élévateur (62) du pont de chargement (B).

2. Installation selon la revendication 1, caractérisée en ce que le pont de chargement (B) ou l'élément élévateur (39) possède au moins un dispositif de compression (74) avec des canaux mobiles (79) pour la production d'agglomérés (D) et que le canal de compression (79) constitue un organe d'empilage pour les agglomérés (D) ou possède un tel organe.

3. Installation selon la revendication 1 ou 2 caractérisée en ce qu'au pont de chargement (B) ou à au moins un élément élévateur est fixée de manière mobile au moins une lance d'aération (65) éventuellement réglable en longueur qui est liée à un amenage d'air et — le cas échéant — à des amortisseurs à liquide (81).

4. Installation selon la revendication 3 caractérisée en ce que la lance d'aération (65) possède, au moins dans la zone de la pointe de lance (66), des sondes de température (70) et/ou au moins une buse soufflante (67) et/ou des manomètres (80).

5. Installation selon la revendication 4 caractérisée en ce que les sondes de température (70) et/ou les atomiseurs à liquide (81) sont liés à un dispositif de réglage (71) qui est rattaché à un appareil de commande pour la manœuvre des lances d'aération (65) et/ou la/les buse(s) soufflante(s) (67) et/ou les atomiseurs à liquide (81).

6. Installation selon une des revendications 1 à 5 caractérisée en ce que le dispositif à fraiser (60) et/ou la/les lance(s) d'aération (65) et/ou les sondes de température (70) ou manomètres (80) et/ou la/les buse(s) soufflante(s) (67) sont liés à un dispositif de réglage pour les mouvements en coordonnées, le dispositif de réglage étant fait pour viser un point dans un système de coordonnées au moins bidimensionnel (points de cliché E).

7. Installation selon une des revendications précitées caractérisée en ce qu'ils sont prévues comme dispositif à fraiser (60) au moins deux fraises oscillantes (61) se trouvant à des organes élévateurs (62) verticaux et télescopiques dont les mouvements sont dirigibles.

8. Installation selon une des revendications précitées caractérisée en ce que le transporteur (40) est verticalement déplaçable vers le bas à peu près jusqu'à la surface de stockage (17a, 17b, 17c).

9. Installation selon une des revendications précitées caractérisée en ce que le transporteur (40) est fait comme convoyeur à chaîne à raclettes (42 à 45) avec des traverses (44) autour d'un fond à tamis (42) horizontal, que le convoyeur à chaîne à raclettes (42 à 45) est lié — le cas échéant moyennant d'un dispositif de transfert déplaçable (30) — à la chaîne de transport (18a, 18b, 18c) par le premier transporteur intermédiaire (38) et que le mécanisme de commande du convoyeur à chaîne à raclettes est éventuellement réversible.

10. Installation selon une des revendications précitées caractérisée en ce que entre la chaîne de transport (18a, 18b, 18c) et le transporteur (40) — de préférence au passage entre la chaîne de transport et le premier transporteur intermédiaire (38) — il est prévu un dispositif de transfert déplaçable (30) dans lequel se trouve dans la trajectoire des matières à composter (K) à un arbre horizontal un organe destiné à l'accélération des particules — de préférence une roue à augets (33) — un transporteur à courte distance (34) placé au-dessous de celui-ci et incliné par rapport à la surface de stockage (17a, 17b, 17c) qui est éventuellement réglable concernant son inclinaison et une plaque de déviation (35) placée parallèlement à l'arbre de la roue à augets et d'une distance horizontale par rapport à celui-ci, et que au-dessous de la plaque de déviation (35) est rattaché un transporteur transversal (36) pour l'accueil de matériaux durs (N) d'une telle manière que les matériaux durs (N) sont lançable du transporteur à courte distance incliné (34) contre la plaque de déviation (35) et de celle-ci au transporteur transversal (36) (fig. 2).

11. Installation selon la revendication 10 caractérisée en ce qu'au point de déversement du transporteur transversal (36) il est prévu au moins un deuxième transporteur intermédiaire (48) réglable en longueur qui est ou rattaché directement à un transporteur au-dessous du sol (21) pour les matériaux durs (N) ou lié au convoyeur à chaîne à raclettes (42 à 45) dont le point de déversement est lié au transporteur au-dessous du sol moyennant au moins un troisième transporteur intermédiaire (47) réglable en longueur.

12. Installation selon une des revendications 1 à 11 caractérisée en ce que entre le premier transporteur intermédiaire (38) réglable en longueur et le convoyeur à chaîne à raclettes (42 à 45) il se trouve au moins un curseur (49) qui sert de changement d'itinéraire entre le convoyeur à chaîne à raclettes (42 à 45) et une première plaque de base (50) placée au-dessous de la zone d'alimentation du convoyeur à chaîne à raclettes (42 à 45).

13. Installation selon la revendication 12 caractérisée en ce qu'une deuxième plaque de base (50) est prévue dans la zone de la tête (46) du convoyeur à chaîne à raclettes et que le transporteur (40) possède au moins une arête à dépouiller (Q) se trouvant dans la zone entre les plaques de base.

14. Installation selon la revendication 13 caractérisée en ce que au moins à une arête (51, 51a) des plaques de base (50, 50a) ils sont prévus des organes de contrôle pour la mesure du niveau.

15. Installation selon au moins une des revendications 13 ou 14 caractérisée en ce que la distance de l'arête à dépouiller (Q) est réglable par rapport à la surface de stockage (17a, 17b, 17c) et/ou le transporteur (40) est automatiquement déplaçable graduellement et transversalement au sens de transport (x) dans la mesure correspondant à la largeur (v) du convoyeur à chaîne à raclettes.

16. Installation selon une des revendications précitées caractérisée en ce que le dispositif de compression (74) est déplaçable automatiquement entre le pont de chargement et la surface de stockage (17a, 17b, 17c).

17. Installation selon une des revendications 2 à 16 caractérisée en ce qu'il est prévu au moins un silo (73) entre un canal de compression environ horizontal (79) et le transporteur (40), le fond du silo (75) étant fait comme organe transporteur et/ou dont la sortie (77) possède un dispositif de dosage (76).

18. Installation selon la revendication 17 caractérisée en ce que le canal de compression (79) est lié à un organe équilibreur (64) et/ou que celui-ci possède une bouche de serrage mobile (86) à une de ses extrémités ainsi qu'un piston de serrage (85) à l'autre.

19. Installation selon la revendication 17 ou 18 caractérisée en ce que le canal de compression (79) et/ou le dispositif de compression (74) sont automatiquement déplaçable horizontalement après chaque processus de compression ou que le fond (89) ou une paroi du canal de compression est/sont fait(s) de manière déplaçable dans la zone de la bouche de serrage (88) pour l'empilage des agglomérés (D).

20. Installation selon une des revendications 17 à 19 caractérisée en ce qu'elle possède un rang horizontal composé de plusieurs canaux de compression (79) placé l'un à côté de l'autre et/ou plusieurs canaux de compression (79) superposés.

21. Installation selon une des revendications 1 à 20 caractérisée en ce qu'il est prévu au moins une bande transporteuse (91) entre le dispositif à fraiser (60) et le dispositif de compression (74) ou plutôt le silo (73).

22. Installation selon une des revendications 1 à 21 caractérisée en ce qu'ils sont prévus des atomiseurs (92) au moins dans la zone du dispositif à fraiser (60) destinés au mouillage du matériel de fraisage résultant des agglomérés (d) et qu'ils sont liés à des conduits (93) pour ramasser le filtrat qui résulte du procédé de compression.

23. Installation selon une des revendications 1 à 22 caractérisée en ce que la surface de stockage (17a, 17b, 17c) recouverte par celle-ci possède des canaux (53) pour l'alimentation d'air ainsi que des ouvertures d'air placées en quadrillage et qu'il est prévu au moins une installation d'aspiration (59) pour des gaz au-dessus de la meule (W) et que cette installation est liée au moins à un ventilateur (57) dont la bouche de la sortie est liée à un système d'aération (53, 54) de la meule (W) et/ou d'une place de putréfaction ultérieure (55).

24. Installation selon la revendication 23 caractérisée en ce qu'il est prévu dans le circuit de gaz (59, 58, 53) au moins un condensateur sous forme d'une chambre de stabilisation (56) et qu'il est lié éventuellement à des atomiseurs au-dessus de la meule (W) et/ou au-dessus de la place de putréfaction ultérieure (55).

Fig.1

0 004 094

Fig. 2

Fig.3

Fig.4

4

Fig.5

0 004 094

Fig.6

Fig.7